# EUROPEAN PATENT SPECIFICATION

(11) **EP 2 845 406 B1**
(45) Date of publication and mention of the grant of the patent: **06.06.2018**
(21) Application number: 13721625.5
(22) Date of filing: 29.04.2013
(51) Int. Cl.: H04W 16/14

(54) **RADIO RESOURCE SHARING**
GEMEINSAME FUNKRESSOURCENNUTZUNG
PARTAGE DE RESSOURCES RADIO

(30) Priority: 04.05.2012 WO PCT/EP2012/058281
(43) Date of publication of application: 11.03.2015
(73) Proprietor: Nokia Solutions and Networks Oy, 02610 Espoo (FI)
(72) Inventor: YU, Ling, FIN-90650 Oulu (FI); HORNEMAN, Kari Veikko, FIN-90800 Oulu (FI)
(74) Representative: Nokia EPO representatives
(86) International application number: PCT/EP2013/058860
(87) International publication number: WO 2013/164299

(56) References cited:
- EP-A2- 1 742 427
- WO-A1-2011/007539
- "Modification to the draft report on ASA based on WGFM#73 output", CG COORDINATOR , 3 February 2012 (2012-02-03), 3 February 2012 (2012-02-03), XP7922422, Retrieved from the Internet: URL:http://www.cept.org/Documents/cg-crs/3 870/CGCRS_12_04_Modifications-to-the-draft -report-on-ASA-based-on-WGFM73-output [retrieved on 2013-12-02]

## Description

Some radio resources used for radio transmissions outside the control of one radio system may also be suited to transmissions under the control of that radio system.

There has been identified the challenge of facilitating the sharing of at least one radio resource between transmissions outside the control of a radio system and transmissions under the control of the radio system.

EP 1742427 discloses a method of resource sharing between a plurality of communication networks each having a nominal resource allocation of a shared air interface resource and a resource exchange allowance is provided. A temporary resource allocation of a first air interface resource from a nominal resource allocation of a first network is initiated.

Subsequently, a plurality of offer rounds are executed with each offer round comprising determining offer values for the first air interface resource. A second network is then selected in response to the determined offer values and subsequently a resource allocation message is transmitted to the second network.

EP 2456250 discloses that in cognitive radio communication device, before a communication link for the cognitive radio communication is established, a control channel which is a common channel which can be used by a plurality of cognitive radio communication devices is detected. By exchanging sensing information and sensing control information among the plurality of radio communication devices using the detected common channel, the information is shared. The plurality of cognitive radio communication devices share the sensing information and the sensing control information, and use the information for determining a channel used for spectrum monitoring and data communication.

Modification to the draft report on ASA based on WGFM#73 output discloses a description of the ASA concept: The ASA concept is a framework to share spectrum between limited numbers of users. Under this concept, the initial user(s) (the "incumbent(s)" in this report) would share its spectrum (the ASA spectrum in this report) with one or several new users (the "incoming user(s)") in accordance with a set of conditions to be defined by the regulation. These conditions may be "static" (e.g. exclusion zone, restricted time for operation) or more 'dynamic' (e.g. geographic/time sharing, on-demand authorisation of operators licensed under the ASA concept or on-demand restrictions by incumbents). In the latter case, a system for updating, maintaining and providing the access conditions is to be established. A key feature of ASA is to ensure a predictable quality of service for all spectrum use rights holders, network operators and for consumers.

There is hereby provided a method comprising: controlling, by a mobile device, transmission of a random access preamble message to a radio access network the message indicating a mobile device identifier recognisable to the radio access network as an indication that the mobile device has information about a use of at least one shared radio resource for transmissions outside a control of the radio access network; establishing a radio connection to the radio access network, and transmitting the information for an authorised shared access controller by using the established connection.

There is also hereby provided a method comprising: detecting, by a radio access network node, a random access preamble message, the message indicating a mobile device identifier recognisable to the radio access network as an indication that the mobile device has information about a use of at least one shared radio resource for transmissions outside a control of the radio access network; establishing a radio connection to the mobile device, and in case of a plurality of access requests, give priority to the mobile device; providing either a control plane or a user plane connection between the mobile device and an authorised shared access controller, and receiving the information and transmitting the information to the authorised shared access controller.

There is also hereby provided an apparatus comprising a processor and memory including computer program code, wherein the memory and computer program code are configured to, with the processor, cause the apparatus to: control, by a mobile device, transmission of a random access preamble message to a radio access network the message indicating a mobile device identifier recognisable to the radio access network as an indication that the mobile device has information about a use of at least one shared radio resource for transmissions outside a control of the radio access network; establish a radio connection to the radio access network, and transmit the information for an authorised shared access controller by using the established connection.

There is also hereby provided an apparatus comprising a processor and memory including computer program code, wherein the memory and computer program code are configured to, with the processor, cause the apparatus to: detect, by a radio access network node, a random access preamble message, the message indicating a mobile device identifier recognisable to the radio access network as an indication that the mobile device has information about a use of at least one shared radio resource for transmissions outside a control of the radio access network; establish a radio connection to the mobile device, and in case of a plurality of access requests, give priority to the mobile device; provide either a control plane or a user plane connection between the mobile device and an authorised shared access controller, and receiving the information and transmitting the information to the authorised shared access controller.

Some embodiments of the present invention are described in detail hereunder, by way of example only, with reference to the accompanying drawings, in which:
Figure 1 illustrates an example of a radio access network in which embodiments of the present invention can be implemented;
Figure 2 illustrates an example of apparatus for a device for making both transmissions under the control of the radio access network, and transmissions outside the control of the radio access network;
Figures 3a and 3b illustrate examples of apparatus for use at an access node in Figure 1;
Figure 4 illustrates an example of apparatus for use at an Authorised Shared Access (ASA) controller in Figure 1; and
Figures 5 and 6 illustrate respective examples of operations according to embodiments of the present invention.

An embodiment of the present invention is described in detail below for the example of an Evolved UTRAN (EUTRAN), but the same technique is also applicable to other kinds of radio access networks.

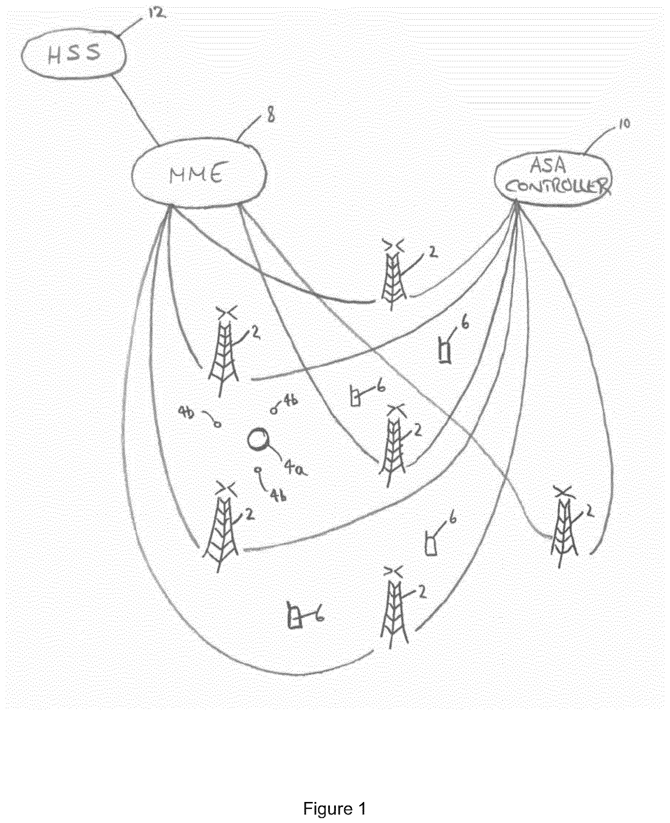

Figure 1 illustrates part of the architecture of one example of a cellular communication system in which embodiments of the present invention can be implemented. The cellular communication system includes a plurality of access nodes 2 respectively operating at least one cell.

In this example, the access nodes 2 are base stations (eNodeBs) of a EUTRAN, typically comprising thousands of such base stations, nodes, servers or hosts, each operating one or more cells. The coverage area of each cell depends on the transmission power and the directionality of the antenna by which the cell is operated. Alternatively, the access nodes may be a combination of network entities such as a remote radio head and server or host.

The eNBs 2 are connected to a mobile management entity (MME) 8, which forms part of an Evolved Packet Core (EPC) and whose functions include authenticating devices requesting connections to the network, by interacting with the home subscriber server (HSS) 12. The HSS 12 is a central database that contains user-related and subscription-related information. Together the EPC and EUTRAN form an Evolved Packet System (EPS). The MME 8 is responsible for the generation and allocation of temporary device identifiers to devices served by the Evolved Packet System (EPS).

The eNBs 2 are also connected to an ASA controller 10, whose function and operation is discussed in more detail below. Figure 1 indicates some kind of connection between the eNBs 2 and the ASA controller 10. ASA controller may be part of an Operations and Maintenance (O&M) system to which the eNBs 2 are connected other than via the EPC (e.g. via the internet). Alternatively, the ASA controller 10 may be a component of the EPC. Alternatively, the ASA controller may be a server which can be accessed via eNB 2 and one or more core network entities (e.g. Serving Gateway (S-GW)/Packet Date Network Gateway (PDN-GW) of the EPC). It should be appreciated that the functionalities of an ASA controller may also be carried out at least partially by using cloud services.

Figure 1 also shows a device 4a within the coverage area of one or more cells of the EUTRAN and configured for making and/or receiving radio transmissions, which transmissions are outside the control of the EUTRAN. According to one example, device 4a is a control unit of a wireless camera network and is configured for receiving and processing wireless transmissions of video data from one or more wireless cameras 4b. According to one other example, device 4a forms part of a military defence communication system. According to another example, the device 4a is an earth-based receiving station of a satellite system, and device 4a receives transmissions not from other earth-based devices but from satellites. According to yet another example, device 4a is a device for transmitting and/or detecting radar signals. In each example, the operation of device 4a is characterised by making/and or receiving transmissions outside the control of EUTRAN, which transmissions are made using at least one radio resource that is primarily for use for transmissions outside the control of the EUTRAN , but is also suitable for transmissions under the control of EUTRAN. For example, the at least one radio resource could be part of the radio spectrum that is licensed to e.g. a wireless camera operator, but which is also suitable for supplementing the part of the radio spectrum licensed to the EUTRAN.

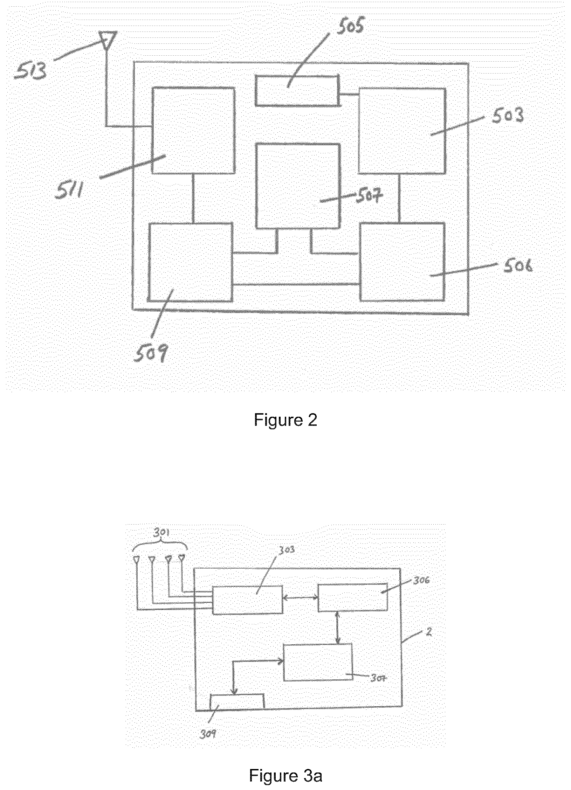

As discussed below: according to an embodiment of the present invention, device 4a also makes and/or receives transmissions under the control of EUTRAN, but the main function of EUTRAN is to serve user equipment or user devices (UE) 6 that are not part of the e.g. wireless camera network. Only a small number of UEs 6 are shown in Figure 1, but a EUTRAN would typically serve a very large number of UEs 6. Some examples of user devices (UEs) include mobile phones, smart phones, portable media players, tablets and other portable computer devices etc..Figure 2 shows one example of apparatus for device 4a for both (i) making and/or receiving transmissions outside the control of the EUTRAN and (ii) making and receiving transmissions under the control of the EUTRAN. Functionality for making and/or receiving transmissions under the control of the EUTRAN is integrated with the functionality for making and/or receiving transmissions outside the control of the EUTRAN. The EUTRAN capabilities are implemented in the device belonging to the radio system involving transmissions outside the control of the EUTRAN. The device 4a includes one or more processors 509 for controlling radio transceiver circuitry, unit or module 511 to make and/or receive transmissions to/from associated devices 4b outside the control of EUTRAN. The transceiver 511 is connected to antenna arrangement 513 comprising at least one antenna or antenna unit. The device 4a also includes a baseband unit comprising one or more baseband processors 506 for controlling second radio transceiver circuitry, unit or module 503 for receiving and making transmissions under the control of EUTRAN via a second antenna or antenna unit 505. The processors 506, 509 are connected to at least one memory or data storage entity 507. The processors 506, 509 and one or more memory entities 507 may be provided on one or more appropriate circuit boards and/or in one or more chipsets. The memory or data storage entity 507 is typically internal but may also be external or a combination thereof.

Figure 3a shows one example of apparatus for use at the eNBs 2 of Figure 1. The apparatus comprises or is coupled to a radio frequency antenna array 301 (comprising at least one antenna or antenna unit) configured to receive and transmit radio frequency signals; radio transceiver circuitry, module or unit 303 configured to interface the radio frequency signals received and transmitted by the antenna array 301; and a baseband unit comprising one or more baseband processors 306. The apparatus usually comprises an interface 309 via which, for example, the baseband processor 306 can communicate with other network elements such as the core network (not shown). The baseband processor 306 is configured to process signals from the radio transceiver 303. It may also control the radio transceiver 303 to generate suitable RF signals to communicate information to UEs 6, device 4a or other eNBs 2 via a wireless communications link, and also to exchange information with other network nodes 8 and/or other eNBs 2 across a wired link via the interface 309. The one or more memory or data storage units 307 are used for storing data, parameters and/or instructions for use by the baseband processor 306. The memory or data storage entity may be internal or external (locating in another network entity) or a combination thereof.

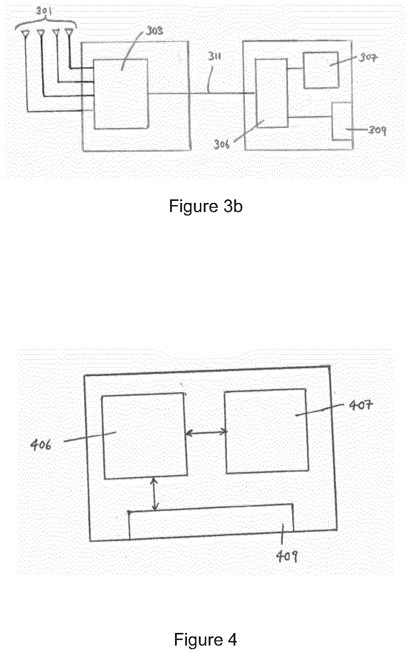

Figure 3b illustrates another example of apparatus for use at the eNBs 2 of Figure 1. The apparatus is the same as that of Figure 3a except that the baseband unit comprising the baseband processor 306 is located remotely from the radio transceiver 303 and the antenna array 301, and is connected to the radio transceiver 303 by e.g. a fibre optic link 311.

Figure 4 shows an example of apparatus for use at a network entity such as the ASA controller 10. The apparatus 400 includes one or more memories 407 for storing program code, and one or more data processors 406 for controlling the actions described below in accordance with program code stored at the one or more memories 407. The apparatus also comprises an interface 407 via which it can send and receive information to and from other network nodes, such as eNBs 2 and other EPC components.

The memories 307, 407, 507 may be implemented using an suitable data storage technology, such as, for example, semiconductor based memory devices, flash memory, magnetic memory devices and systems, optical memory devices and systems, fixed memory and removable memory. The data processors 306, 406, 506, 509 may, for example, include one or more of microprocessors, digital signal processors (DSPs) and processors based on a multi-core processor architecture.

References below to processors 306, 406, 506, 509 controlling the operation of other elements of device 4a, eNBs 2 and ASA controller 10 refer to the processors operating in accordance with program code stored at memories 307, 407, 507.

It would be appreciated that the apparatus shown in each of figures 2, 3, and 4 described above may comprise further elements which are not directly involved with the embodiments of the invention described hereafter.

According to one embodiment of the present invention, device 4a communicates information to the EUTRAN about the use of a radio resource that is primarily licensed to non-EUTRAN transmissions made by the communication system of which device 4a forms part, but which is also suitable for supplementing the radio resource licenced to the EUTRAN. This radio resource is hereafter referred to as the shared radio resource. Non-EUTRAN transmissions refers to transmissions outside the control of the EUTRAN. Such information communicated from device 4a to the EUTRAN could for example comprise a simple message indicating that EUTRAN is permitted to use the shared radio resource in a certain geographical area for a certain time period (because the shared radio resource is not being used for non-EUTRAN transmissions), or a simple message indicating that EUTRAN is to stop using the shared radio resource (because the shared radio resource is again needed for non-EUTRAN transmissions). Where the geographical area over which the radio system of device 4a extends is pre-defined, these messages sent from device 4a to EUTRAN need not specify the geographical area. The time period for which EUTRAN is permitted to use the shared radio resource may be indicated, for example, by a combination of a starting time and a length of time.

The EUTRAN may be configured to give special treatment to devices with information about the use of a shared radio resource (which devices are hereafter referred to as UE_PUs) over one or more other categories of UEs 6 that do not provide information about a shared radio resource.

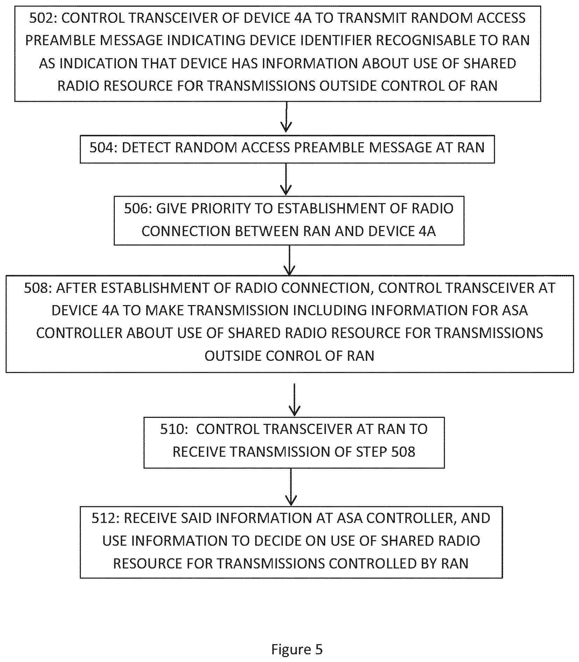

One example of operations at device 4a and the EUTRAN for the communication of this information is illustrated in Figure 5.

Device 4a is registered with EUTRAN as a special subscriber. A special subscriber profile is created for device 4a at HSS following an agreement between the operator of the EUTRAN and the operator of the other radio system to which device 4a belongs about use of the shared radio resource. As discussed below, the shared radio resource could be part of the radio spectrum that is primarily licensed to the operator of the other radio system (incumbent user), and the agreement with the EUTRAN operator could be part of a sharing scheme such as the Authorised Shared Access (ASA) scheme. The agreement between the incumbent user and the EUTRAN operator may, for example, specify one or more conditions on the use of the incumbent user's radio spectrum by the EUTRAN, and specify the compensation that the incumbent user would receive in return for sharing its radio spectrum with the EUTRAN.

For each type of device identifier (e.g. C-RNTI and M-TMSI used by an eNB or the EPC to distinguish different UEs), device 4a is allocated a special value reserved for UE_PUs. C-RNTI is the Cell Radio Network Temporary Identifier and M-TMSI is the MME-Temporary Mobile Subscriber Identity. One or more special values for device identifiers for UE_PUs may be specified in standardization and stored as hardcode in memory 507 of device 4a, or one or more special values may be semi-statically decided by network components such as the eNB 2 and MME 8 and communicated to UE_PUs by common control signalling (e.g. by broadcasted system information) in those cells in which the shared radio resource is expected to be used. The latter option is particularly useful for UE_PUs that are not stationary devices; a mobile UE_PU randomly selects one of the special device identifier values broadcast by the cell in which it currently resides before starting the initial access procedure. These special device identifier values for UE_PUs facilitate the provision of special treatment to access requests by UE_PUs even before the retrieval and checking of subscriber information from HSS 12. Limitations may be imposed on the services that UE_PUs (UEs that use the above-mentioned special device identifier values to identify themselves to the network) may receive from the network. For example, UE_PUs may be limited to control plane services from the network (with or without mobility support), and may be excluded from all user plane services provided by the network. Alternatively, in the example described below in which the communication of information about the shared radio resource from the UE_PU to the ASA controller relies on a user-plane data connection, the UE_PU may be excluded from all other user-plane services provided by the network. The services available to a UE_PU may be defined statically by standardization, or may be pre-configured semi-statically for an individual UE-PU, based on e.g. subscriber information, when the UE_PU attaches to the EUTRAN.

The access procedure begins with the baseband processor 506 of device 4a controlling the transceiver 503 of device 4a to transmit a random access preamble message comprising a MAC C-PDU including the special C-RNTI value assigned to device 4a or randomly selected by device 4a from a set of special C-RNTI values broadcast by EUTRAN (STEP 502 of Figure 5).

The baseband processor 306 at the serving eNB 2 controls its transceiver 303 to receive random access preamble messages, and in response to detecting a random access preamble message including a special C-RNTI value (STEP 504 of Figure 5), the baseband processor 306 handles and accepts the access request with priority over one or more other access requests (STEP 506 of Figure 5). The UE_PU specific signalling bearer (e.g. radio bearer and S1 bearer for the example of EUTRAN; wherein the S1 bearer is the bearer for the interface between the eNB 2 and MME 8) and any required user-plane bearer may be statically defined by standardization or pre-configured between device 4a and the network so that the radio connection between RAN and device 4a can be established without exchange of explicit signalling and optional user plane bearer configuration information. In this way it reduces signalling overhead for the initial access signalling procedures and speeds up the process of establishing a connection for the communication of information to the ASA controller 10 about the shared radio resource.

According to one example, the communication to the ASA controller 10 of information about the shared radio resource is achieved by control signalling messages/procedures (such as NAS signalling procedures) between device 4a and the ASA controller 10. According to another example, the ASA controller 10 is seen by device 4a as a user plane server, and the device 4a sets up a user plane connection to the ASA controller for communicating information about the shared radio resource to the ASA controller. In either of these examples, the baseband processor 506 at device 4a controls the transceiver 503 of device 4a to make a radio transmission including information for the ASA controller about the shared radio resource (STEP 508); the baseband processor 306 at eNB 2 controls the transceiver 303 of eNB 2 to receive the radio transmission (STEP 510); and the information included in the transmission about the shared radio resource is sent to the ASA controller 10 from eNB 2 via interface 309. A processor 406 at ASA controller 10 receives the information about the shared radio resource, and uses the information to make decisions about use of the shared radio resource for transmissions controlled by the EUTRAN (STEP 512 of Figure 5). For example, if the information received at ASA controller 10 from device 4a includes a simple message indicating permission to use the shared radio resource, or a simple message indicating a need to use the shared radio resource for transmissions outside the control of the EUTRAN, the ASA controller 10 controls the use of the shared radio resource for EUTRAN transmissions accordingly, for the geographical area and time period for which the message from device 4a is valid.

If device 4a is a mobile device that may move between cells of the EUTRAN, inter-cell handover of device 4a may result in a change to the use of the shared radio resource for EUTRAN transmissions. When device 4a accesses a new EUTRAN cell, device 4a repeats the procedure described above to provide updated information about use of the shared radio resource. According to one example, the possibility to use the shared radio resource for EUTRAN transmissions is predetermined for each possible location in which device 4a might reside (a simple one-to-one mapping relationship between (a) the location of device 4a and (b) whether or not the shared radio resource can be used for EUTRAN transmissions); and the ASA controller 10 controls the use of the shared radio resource for EUTRAN transmissions according to information about the location of device 4a.

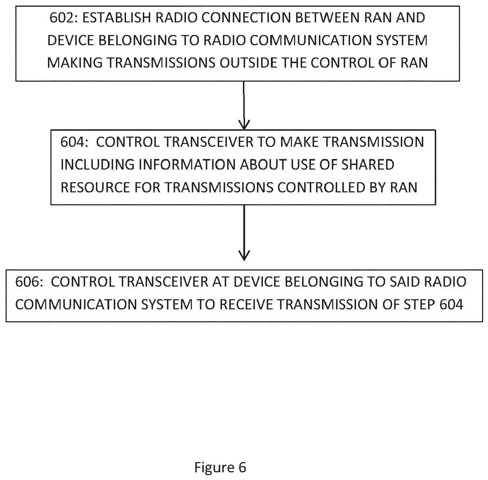

According to another embodiment, device 4a also collects information from the ASA controller 10 about use of the shared radio resource for EUTRAN transmissions, in order to e.g. supervise the use of the shared radio resources for EUTRAN transmissions. One example of operations is shown in Figure 6. The baseband processor 306 at serving eNB 2 controls the transceiver 303 at serving eNB 2 to make and receive transmissions to/from device 4a including control information for establishing a connection with device 4a (STEP 602 of Figure 6). In more detail, the connection for receiving such information from EUTRAN about the use of the shared radio resource for EUTRAN transmissions can be established in the same way as described above for connections for transmitting information about use of the shared radio resource for non-EUTRAN transmissions to EUTRAN (see STEPS 502 to 506 of Figure 6). The connection may be initiated at either device 4a or at EUTRAN. For the example that the connection is initiated at EUTRAN, the baseband processor 306 at eNB 2 may control the transceiver 303 of eNB 2 to transmit a paging message that is recognisable by device 4a to initiate the establishment of a radio connection with the eNB 2, and the process then proceeds in the same way as illustrated in STEPs 502 to 506 of Figure 5. As part of the establishment of the radio connection or after the establishment of the radio connection, the baseband processor 306 at serving eNB 2 controls transceiver 303 of serving eNB 2 to make a transmission including information for device 4a about use of the shared radio resource for EUTRAN transmissions; and the baseband processor 506 at device 4a controls the transceiver 503 at device 4a to receive said transmission by serving eNB 2. This communication of information from the ASA controller 10 to device 4a may be achieved by control plane signalling procedures or by a user plane data connection.

The above-described techniques are of use, for example, in the scheme known as Authorised Shared Access (ASA), which is a complementary spectrum authorisation scheme for commercial use that is aimed at enabling timely availability of harmonised spectrum for mobile broadband while ensuring predictable quality of service (QoS) for both primary and secondary users.

The program code mentioned above may include software routines, applets and macros. Program code may, for example, be copied into the one or more memories 307, 407, 507 from any apparatus-readable non-transitory data storage medium. Computer program codes may be coded by a programming language, which may be a high-level programming language, such as objective-C, C, C++, C#, Java, etc., or a low-level programming language, such as a machine language, or an assembler.

Alternatively, some of the above-described functions or other functions performed at device 4a, eNBs 2 or ASA controller 10 may be implemented by one or more application specific integrated circuits (ASICs), chip sets, field programmable gate arrays (FPGAs), photonic integrated circuits, etc..

The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre stored design modules. Once the design for a semiconductor circuit has been completed, the resultant design, in a standardized electronic format (e.g., Opus, GDSII, or the like) may be transmitted to a semiconductor fabrication facility or "fab" for fabrication.

In addition to the modifications explicitly mentioned above, it will be evident to a person skilled in the art that various other modifications of the described embodiment may be made within the scope of the invention.

## Claims

1. A method, performed by a mobile device, comprising:
controlling (502), by the mobile device, transmission of a random access preamble message to a radio access network the message indicating a mobile device identifier recognisable to the radio access network as an indication that the mobile device has information about a use of at least one shared radio resource for transmissions outside a control of the radio access network;
establishing (508) a radio connection to the radio access network, and
transmitting (508) the information for an authorised shared access controller by using the established connection.

2. The method according to claim 1, wherein the identifier is a special cell radio network temporary identifier and/or special mobile management entity temporary mobile subscriber identity value assigned to the mobile device or randomly selected by the mobile device from a set of values broadcast by the radio access network.

3. The method according to claim 1 or 2, wherein the information about a use of at least one shared radio resource for transmissions outside a control of the radio access network comprises a message indicating permission to use the shared radio resource, or a message indicating a need to use the shared radio resource.

4. The method according to any preceding claim, further comprising:
collecting information from the authorised shared access controller about use of the shared radio resource under the control of the radio access network.

5. The method according to any preceding claims, wherein said information comprises a message indicating permission for the use of said at least one radio resource for one or more transmissions under the control of the radio access network , or a message prohibiting the use of said at least one radio resource for one or more transmissions under the control of the radio access network.

6. A method performed by a radio access network node, comprising:
detecting (504), by the radio access network node, a random access preamble message, the message indicating a mobile device identifier recognisable to the radio access network as an indication that the mobile device has information about a use of at least one shared radio resource for transmissions outside a control of the radio access network;
establishing (506, 508) a radio connection to the mobile device, and in case of a plurality of access requests, give priority to the mobile device;
providing either a control plane or a user plane connection between the mobile device and an authorised shared access controller, and receiving the information and transmitting the information to the authorised shared access controller.

7. The method of claim 6, wherein the identifier is a special cell radio network temporary identifier and/or special mobile management entity temporary mobile subscriber identity value assigned to the mobile device or randomly selected by the mobile device from a set of values broadcast by the radio access network.

8. The method of claim 6 or 7, wherein the information about a use of at least one shared radio resource for transmissions outside a control of the radio access network comprises a message indicating permission to use the shared radio resource, or a message indicating a need to use the shared radio resource.

9. An apparatus for a mobile device, comprising a processor and memory including computer program code, wherein the memory and computer program code are configured to, with the processor, cause the apparatus to:
control, by the mobile device, transmission of a random access preamble message to a radio access network the message indicating a mobile device identifier recognisable to the radio access network as an indication that the mobile device has information about a use of at least one shared radio resource for transmissions outside a control of the radio access network;
establish a radio connection to the radio access network, and
transmit the information for an authorised shared access controller by using the established connection.

10. The apparatus according to claim 9, wherein the identifier is a special cell radio network temporary identifier and/or special mobile management entity temporary mobile subscriber identity value assigned to the mobile device or randomly selected by the mobile device from a set of values broadcast by the radio access network.

11. The apparatus according to claim 9 or 10, wherein the information about a use of at least one shared radio resource for transmissions outside a control of the radio access network comprises a message indicating permission to use the shared radio resource, or a message indicating a need to use the shared radio resource.

12. The apparatus according to any preceding claim 9 to 11, further comprising:
collecting information from the authorised shared access controller about use of the shared radio resource under the control of the radio access network.

13. The apparatus according to any preceding claim 9 to 12, wherein said information comprises a message indicating permission for the use of said at least one radio resource for one or more transmissions under the control of the radio access network, or a message prohibiting the use of said at least one radio resource for one or more transmissions under the control of the radio access network.

14. An apparatus for a radio access network node, comprising a processor and memory including computer program code, wherein the memory and computer program code are configured to, with the processor, cause the apparatus to:
detect, by the radio access network node, a random access preamble message, the message indicating a mobile device identifier recognisable to the radio access network as an indication that the mobile device has information about a use of at least one shared radio resource for transmissions outside a control of the radio access network;
establish a radio connection to the mobile device, and in case of a plurality of access requests, give priority to the mobile device;
provide either a control plane or a user plane connection between the mobile device and an authorised shared access controller, and receiving the information and transmitting the information to the authorised shared access controller.

15. The apparatus of claim 14, wherein the identifier is a special cell radio network temporary identifier and/or special mobile management entity temporary mobile subscriber identity value assigned to the mobile device or randomly selected by the mobile device from a set of values broadcast by the radio access network.

16. The apparatus of claim 14 or 15, wherein the information about a use of at least one shared radio resource for transmissions outside a control of the radio access network comprises a message indicating permission to use the shared radio resource, or a message indicating a need to use the shared radio resource.

## Patentansprüche

1. Verfahren, das durch eine mobile Einrichtung durchgeführt wird und das Folgendes umfasst:
Steuern (502) durch die mobile Einrichtung der Übertragung einer Präambelnachricht mit wahlfreiem Zugriff an ein Funkzugangsnetz, wobei die Nachricht eine Kennung einer mobilen Einrichtung angibt, die für das Funkzugangsnetz als eine Angabe erkennbar ist, dass die mobile Einrichtung Informationen über eine Verwendung von mindestens einem gemeinsam genutzten Funkbetriebsmittel für Übertragungen außerhalb einer Steuerung des Funkzugangsnetzes besitzt;
Aufbauen (508) einer Funkverbindung mit dem Funkzugangsnetz und
Übertragen (508) der Informationen an eine berechtigte Steuereinheit für gemeinsam genutzten Zugriff unter Verwendung der aufgebauten Verbindung.

2. Verfahren nach Anspruch 1, wobei die Kennung eine spezielle temporäre Zellenfunknetzkennung und/oder ein spezieller temporärer Mobilteilnehmeridentitätswert einer Mobilmanagementeinheit ist, der der mobilen Einrichtung zugewiesen ist oder der zufällig durch die mobile Einrichtung aus einem Satz von Werten, die durch das Funkzugangsnetz ausgestrahlt werden, ausgewählt ist.

3. Verfahren nach Anspruch 1 oder 2, wobei die Informationen über eine Verwendung von mindestens einem gemeinsam genutzten Funkbetriebsmittel für Übertragungen außerhalb einer Steuerung des Funkzugangsnetzes eine Nachricht, die eine Genehmigung, das gemeinsam genutzte Funkbetriebsmittel zu verwenden, anzeigt, oder eine Nachricht, die einen Bedarf an der Verwendung des gemeinsam genutzten Funkbetriebsmittels anzeigt, umfassen.

4. Verfahren nach einem vorhergehenden Anspruch, das ferner Folgendes umfasst:
Sammeln von Informationen von der berechtigten Steuereinheit für gemeinsam genutzten Zugriff über die Verwendung des gemeinsam genutzten Funkbetriebsmittels unter der Steuerung des Funkzugangsnetzes.

5. Verfahren nach einem vorhergehenden Anspruch, wobei die Informationen eine Nachricht umfassen, die eine Genehmigung für die Verwendung des mindestens einen Funkbetriebsmittels für eine oder mehrere Übertragungen unter der Steuerung des Funkzugangsnetzes anzeigt, oder eine Nachricht, die die Verwendung des mindestens einen Funkbetriebsmittels für eine oder mehrere Übertragungen unter der Steuerung des Funkzugangsnetzes unterbindet.

6. Verfahren, das durch einen Funkzugangsnetzkonten durchgeführt wird und das Folgendes umfasst:
Detektieren (504) durch den Funkzugangsnetzknoten einer Präambelnachricht mit wahlfreiem Zugriff, wobei die Nachricht eine Kennung einer mobilen Einrichtung angibt, die für das Funkzugangsnetz als eine Angabe erkennbar ist, dass die mobile Einrichtung Informationen über eine Verwendung mindestens eines gemeinsam genutzten Funkbetriebsmittels für Übertragungen außerhalb einer Steuerung des Funkzugangsnetzes besitzt;
Aufbauen (506, 508) einer Funkverbindung mit der mobilen Einrichtung und im Falle mehrerer Zugangsanfragen Einräumen einer Priorität für die mobile Einrichtung;
Bereitstellen einer Verbindung auf Steuerebene oder Anwenderebene zwischen der mobilen Einrichtung und einer berechtigten Steuereinheit für gemeinsam genutzten Zugriff und Empfangen der Informationen und Übertragen der Informationen auf die berechtigte Steuereinheit für gemeinsam genutzten Zugriff.

7. Verfahren nach Anspruch 6, wobei die Kennung eine spezielle temporäre Zellenfunknetzkennung und/oder ein spezieller temporärer Mobilteilnehmeridentitätswert einer Mobilmanagementeinheit ist, der der mobilen Einrichtung zugewiesen wird oder der zufällig durch die mobile Einrichtung aus einem Satz von Werten, die durch das Funkzugangsnetz ausgestrahlt werden, ausgewählt wird.

8. Verfahren nach Anspruch 6 oder 7, wobei die Informationen über eine Verwendung von mindestens einem gemeinsam genutzten Funkbetriebsmittel für Übertragungen außerhalb einer Steuerung des Funkzugangsnetzes eine Nachricht, die eine Genehmigung, das gemeinsam genutzte Funkbetriebsmittel zu verwenden, anzeigt, oder eine Nachricht, die einen Bedarf an der Verwendung des gemeinsam genutzten Funkbetriebsmittels anzeigt, umfassen.

9. Vorrichtung für eine mobile Einrichtung, die einen Prozessor und einen Speicher, der Computerprogrammcode enthält, umfasst, wobei der Speicher und der Computerprogrammcode konfiguriert sind, mit dem Prozessor die Vorrichtung zu folgenden Schritten zu veranlassen:
Steuern durch die mobile Vorrichtung der Übertragung einer Präambelnachricht mit wahlfreiem Zugriff an ein Funkzugangsnetz, wobei die Nachricht eine Kennung einer mobilen Einrichtung angibt, die für das Funkzugangsnetz als eine Angabe erkennbar ist, dass die mobile Einrichtung Informationen über eine Verwendung von mindestens einem gemeinsam genutzten Funkbetriebsmittel für Übertragungen außerhalb einer Steuerung des Funkzugangsnetzes besitzt;
Aufbauen einer Funkverbindung mit dem Funkzugangsnetz und
Übertragen der Informationen an eine berechtigte Steuereinheit für gemeinsam genutzten Zugriff unter Verwendung der aufgebauten Verbindung.

10. Vorrichtung nach Anspruch 9, wobei die Kennung eine spezielle temporäre Zellenfunknetzkennung und/oder ein spezieller temporärer Mobilteilnehmeridentitätswert einer Mobilmanagementeinheit ist, der der mobilen Einrichtung zugewiesen ist oder der zufällig durch die mobile Einrichtung aus einem Satz von Werten, die von dem Funkzugangsnetz ausgestrahlt werden, ausgewählt ist.

11. Vorrichtung nach Anspruch 9 oder 10, wobei die Informationen über eine Verwendung von mindestens einem gemeinsam genutzten Funkbetriebsmittel für Übertragungen außerhalb einer Steuerung des Funkzugangsnetzes eine Nachricht, die eine Genehmigung, das gemeinsam genutzte Funkbetriebsmittel zu verwenden, anzeigt, oder eine Nachricht, die einen Bedarf an der Verwendung des gemeinsam genutzten Funkbetriebsmittels anzeigt, umfassen.

12. Vorrichtung nach einem der vorhergehenden Ansprüche 9 bis 11, die ferner Folgendes umfasst:
Sammeln von Informationen von der berechtigten Steuereinheit für gemeinsam genutzten Zugriff über die Verwendung des gemeinsam genutzten Funkbetriebsmittels unter der Steuerung des Funkzugangsnetzes.

13. Vorrichtung nach einem der vorhergehenden Ansprüche 9 bis 12, wobei die Informationen eine Nachricht umfassen, die eine Genehmigung für die Verwendung des mindestens einen Funkbetriebsmittels für eine oder mehrere Übertragungen unter der Steuerung des Funkzugangsnetzes anzeigt, oder eine Nachricht, die die Verwendung des mindestens einen Funkbetriebsmittels für eine oder mehrere Übertragungen unter der Steuerung des Funkzugangsnetzes unterbindet.

14. Vorrichtung für einen Funkzugangsnetzkonten, der einen Prozessor und einen Speicher, der Computerprogrammcode enthält, umfasst, wobei der Speicher und der Computerprogrammcode konfiguriert sind, mit dem Prozessor die Vorrichtung zu folgenden Schritten zu veranlassen:
Detektieren durch den Funkzugangsnetzknoten einer Präambelnachricht mit wahlfreiem Zugriff, wobei die Nachricht eine Kennung einer mobilen Einrichtung angibt, die für das Funkzugangsnetz als eine Angabe erkennbar ist, dass die mobile Einrichtung Informationen über eine Verwendung mindestens eines gemeinsam genutzten Funkbetriebsmittels für Übertragungen außerhalb einer Steuerung des Funkzugangsnetzes besitzt;
Aufbauen einer Funkverbindung mit der mobilen Einrichtung und im Falle mehrerer Zugangsanfragen Einräumen einer Priorität für die mobile Einrichtung;
Bereitstellen einer Verbindung auf Steuerebene oder Anwenderebene zwischen der mobilen Einrichtung und einer berechtigten Steuereinheit für gemeinsam genutzten Zugriff und Empfangen der Informationen und Übertragen der Informationen an die berechtigte Steuereinheit für gemeinsam genutzten Zugriff.

15. Vorrichtung nach Anspruch 14, wobei die Kennung eine spezielle temporäre Zellenfunknetzkennung und/oder ein spezieller temporärer Mobilteilnehmeridentitätswert einer Mobilmanagementeinheit ist, der der mobilen Einrichtung zugewiesen ist oder der zufällig durch die mobile Einrichtung aus einem Satz von Werten, die durch das Funkzugangsnetz ausgestrahlt werden, ausgewählt ist.

16. Vorrichtung nach Anspruch 14 oder 15, wobei die Informationen über eine Verwendung von mindestens einem gemeinsam genutzten Funkbetriebsmittel für Übertragungen außerhalb einer Steuerung des Funkzugangsnetzes eine Nachricht, die eine Genehmigung, das gemeinsam genutzte Funkbetriebsmittel zu verwenden, anzeigt, oder eine Nachricht, die einen Bedarf an der Verwendung des gemeinsam genutzten Funkbetriebsmittels anzeigt, umfassen.

## Revendications

1. Procédé, mis en oeuvre par un dispositif mobile, comprenant :
la commande (502), par le dispositif mobile, de la transmission d'un message de préambule d'accès aléatoire à un réseau d'accès radio, le message indiquant un identifiant du dispositif mobile reconnaissable par le réseau d'accès radio comme une indication que le dispositif mobile dispose d'informations concernant une utilisation d'au moins une ressource radio partagée pour des transmissions hors d'une commande du réseau d'accès radio ;
l'établissement (508) d'une liaison radio avec le réseau d'accès radio, et
la transmission (508) des informations pour un contrôleur d'accès partagé autorisé au moyen de la liaison établie.

2. Procédé selon la revendication 1, dans lequel l'identifiant est une valeur spéciale d'un identifiant temporaire de réseau radio-cellule et/ou d'une identité temporaire d'abonné mobile d'entité de gestion de la mobilité assignée au dispositif mobile ou sélectionnée aléatoirement par le dispositif mobile parmi un ensemble de valeurs diffusées par le réseau d'accès radio.

3. Procédé selon la revendication 1 ou 2, dans lequel les informations concernant une utilisation d'au moins une ressource radio partagée pour des transmissions hors d'une commande du réseau d'accès radio comprennent un message indiquant une permission d'utiliser la ressource radio partagée, ou un message indiquant un besoin d'utiliser la ressource radio partagée.

4. Procédé selon l'une quelconque des revendications précédentes, comprenant en outre :
la collecte d'informations, auprès du contrôleur d'accès partagé autorisé, concernant l'utilisation de la ressource radio partagée sous la commande du réseau d'accès radio.

5. Procédé selon l'une quelconque des revendications précédentes, dans lequel lesdites informations comprennent un message indiquant une permission d'utiliser ladite au moins une ressource radio pour une ou plusieurs transmissions sous la commande du réseau d'accès radio, ou un message prohibant l'utilisation de ladite au moins une ressource radio pour une ou plusieurs transmissions sous la commande du réseau d'accès radio.

6. Procédé, mis en oeuvre par un noeud de réseau d'accès radio, comprenant :
la détection (504), par le noeud de réseau d'accès radio, d'un message de préambule d'accès aléatoire, le message indiquant un identifiant d'un dispositif mobile reconnaissable par le réseau d'accès radio comme une indication que le dispositif mobile dispose d'informations concernant une utilisation d'au moins une ressource radio partagée pour des transmissions hors d'une commande du réseau d'accès radio ;
l'établissement (506, 508) d'une liaison radio avec le dispositif mobile et, dans le cas d'une pluralité de requêtes d'accès, l'accord d'une priorité au dispositif mobile ;
la fourniture d'une liaison soit dans le plan de commande, soit dans le plan utilisateur entre le dispositif mobile et un contrôleur d'accès partagé autorisé, et la réception des informations et la transmission des informations au contrôleur d'accès partagé autorisé.

7. Procédé selon la revendication 6, dans lequel l'identifiant est une valeur spéciale d'un identifiant temporaire de réseau radio-cellule et/ou d'une identité temporaire d'abonné mobile d'entité de gestion de la mobilité assignée au dispositif mobile ou sélectionnée aléatoirement par le dispositif mobile parmi un ensemble de valeurs diffusées par le réseau d'accès radio.

8. Procédé selon la revendication 6 ou 7, dans lequel les informations concernant une utilisation d'au moins une ressource radio partagée pour des transmissions hors d'une commande du réseau d'accès radio comprennent un message indiquant une permission d'utiliser la ressource radio partagée, ou un message indiquant un besoin d'utiliser la ressource radio partagée.

9. Appareil pour un dispositif mobile, comprenant un processeur et une mémoire comportant un code de programme d'ordinateur, la mémoire et le code de programme d'ordinateur étant configurés pour, conjointement avec le processeur, amener l'appareil à :
commander, par le dispositif mobile, la transmission d'un message de préambule d'accès aléatoire à un réseau d'accès radio, le message indiquant un identifiant du dispositif mobile reconnaissable par le réseau d'accès radio comme une indication que le dispositif mobile dispose d'informations concernant une utilisation d'au moins une ressource radio partagée pour des transmissions hors d'une commande du réseau d'accès radio ;
établir une liaison radio avec le réseau d'accès radio, et
transmettre les informations pour un contrôleur d'accès partagé autorisé au moyen de la liaison établie.

10. Appareil selon la revendication 9, dans lequel l'identifiant est une valeur spéciale d'un identifiant temporaire de réseau radio-cellule et/ou d'une identité temporaire d'abonné mobile d'entité de gestion de la mobilité assignée au dispositif mobile ou sélectionnée aléatoirement par le dispositif mobile parmi un ensemble de valeurs diffusées par le réseau d'accès radio.

11. Appareil selon la revendication 9 ou 10, dans lequel les informations concernant une utilisation d'au moins une ressource radio partagée pour des transmissions hors d'une commande du réseau d'accès radio comprennent un message indiquant une permission d'utiliser la ressource radio partagée, ou un message indiquant un besoin d'utiliser la ressource radio partagée.

12. Appareil selon l'une quelconque des revendications 9 à 11 précédentes, comprenant en outre :
la collecte d'informations, auprès du contrôleur d'accès partagé autorisé, concernant l'utilisation de la ressource radio partagée sous la commande du réseau d'accès radio.

13. Appareil selon l'une quelconque des revendications 9 à 12 précédentes, dans lequel lesdites informations comprennent un message indiquant une permission d'utiliser ladite au moins une ressource radio pour une ou plusieurs transmissions sous la commande du réseau d'accès radio, ou un message prohibant l'utilisation de ladite au moins une ressource radio pour une ou plusieurs transmissions sous la commande du réseau d'accès radio.

14. Appareil pour un noeud de réseau d'accès radio, comprenant un processeur et une mémoire comportant un code de programme d'ordinateur, la mémoire et le code de programme d'ordinateur étant configurés pour, conjointement avec le processeur, amener l'appareil à :
détecter, par le noeud de réseau d'accès radio, un message de préambule d'accès aléatoire, le message indiquant un identifiant d'un dispositif mobile reconnaissable par le réseau d'accès radio comme une indication que le dispositif mobile dispose d'informations concernant une utilisation d'au moins une ressource radio partagée pour des transmissions hors d'une commande du réseau d'accès radio ;
établir une liaison radio avec le dispositif mobile et, dans le cas d'une pluralité de requêtes d'accès, accorder une priorité au dispositif mobile ;
fournir une liaison soit dans le plan de commande, soit dans le plan utilisateur entre le dispositif mobile et un contrôleur d'accès partagé autorisé, et recevoir les informations et transmettre les informations au contrôleur d'accès partagé autorisé.

15. Appareil selon la revendication 14, dans lequel l'identifiant est une valeur spéciale d'un identifiant temporaire de réseau radio-cellule et/ou d'une identité temporaire d'abonné mobile d'entité de gestion de la mobilité assignée au dispositif mobile ou sélectionnée aléatoirement par le dispositif mobile parmi un ensemble de valeurs diffusées par le réseau d'accès radio.

16. Appareil selon la revendication 14 ou 15, dans lequel les informations concernant une utilisation d'au moins une ressource radio partagée pour des transmissions hors d'une commande du réseau d'accès radio comprennent un message indiquant une permission d'utiliser la ressource radio partagée, ou un message indiquant un besoin d'utiliser la ressource radio partagée.
